# EUROPÄISCHE PATENTANMELDUNG

(11) **EP 1 462 703 A2**
(43) Veröffentlichungstag der Anmeldung: **29.09.2004**
(21) Anmeldenummer: 04006098.0
(22) Anmeldetag: 15.03.2004
(51) Int. Cl.: F16L 25/14, F16L 25/12

(54) **Rohrelement mit Abtrennmitteln**

(30) Priorität: 25.03.2003 DE 10313304
(71) Anmelder: Poloplast GmbH & Co. KG, 4060 Leonding (AT)
(72) Erfinder: Paier, Thomas, 3352 St. Peter in der Au (AT)
(74) Vertreter: Weber, Joachim, Dr.

(57) **Zusammenfassung**

Ein Rohrelement aus Kunststoff mit einem Wandungsbereich (1), welcher mit zumindest zwei zueinander parallelen, umlaufenden, an der Außenseite des Wandungsbereichs (1) ausgebildeten Kerben (2,3) versehen ist, welche einen nach außen abreißbaren Trennstreifen (4) ausbilden, an welchem ein Handhabungselement (5) befestigt ist.

## Beschreibung

Die Erfindung bezieht sich auf ein Rohrelement aus Kunststoff. Im Einzelnen betrifft die Erfindung Futterrohre, Rohrdurchführungen, Übergangsrohre, Bögen, Reparaturformstücke, Adapterformstücke, Schachtanbindungen, Schächte, Fittinge oder Ähnliches.

Aus dem Stand der Technik ist es bekannt, derartige Rohrelemente, Kunststoffrohre, Fittinge etc. mittels Sägen, Scheren, Messern oder sonstigen Werkzeugen abzutrennen bzw. in ihrer Länge anzupassen. Insbesondere bei zunehmender Größe der Rohrelemente und zunehmenden Wandstärken sind entsprechende Werkzeuge erforderlich. Weiterhin ist der Abtrenn- oder Ablängvorgang relativ aufwendig, da ein schiefes Abschneiden oder Ablängen insbesondere bei freihändigen Arbeiten fast zwangsläufig ist. Hieraus ergeben sich Nachteile hinsichtlich der Dichtheit der Rohrsysteme sowie hinsichtlich der Steckbarkeit von Rohrelementen, Fittingen und Ähnlichem.

Abgesehen von dem erforderlichen erhöhten Arbeitsaufwand birgt ein derartiges freies Abtrennen oder Ablängen auch eine erhebliche Verletzungsgefahr.

Ein weiterer Nachteil besteht darin, dass bei den bisher bekannten Vorgehensweisen relativ viel Zeit erforderlich ist, um ein sauberes Trennen des abzulängenden Teils des Rohrelements durchzuführen.

Durch ein schiefes oder nicht ebenes Ablängen ergeben sich weitere Nachteile, beispielsweise bei Futterrohren, die zwischen Schalwände eingesetzt werden. Dabei leidet die Dichtigkeit, so dass Betonmilch eindringen kann.

Der Erfindung liegt die Aufgabe zugrunde, ein Rohrelement der eingangs genannten Art zu schaffen, welches bei einfachem Aufbau und einfacher, kostengünstiger Herstellbarkeit einfach abgetrennt oder abgelängt werden kann.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass an dem Rohrelement ein Wandungsbereich vorgesehen ist, welcher mit zumindest zwei zueinander parallelen, umlaufenden Kerben versehen ist. Diese sind erfindungsgemäß bevorzugter Weise von der Außenseite des Wandungsbereichs ausgebildet. Es ergeben sich jedoch auch Konstruktionen, bei denen eine glatte äußere Oberfläche wünschenswert sein kann und die Kerben deswegen an der Innenseite vorgesehen sind. Die Kerben bilden einen üblicherweise nach außen abreißbaren Trennstreifen, an welchem ein Handhabungselement befestigt ist. Das Handhabungselement dient dazu, den Trennstreifen herauszuziehen oder herauszureißen. Das Handhabungselement ist dabei bevorzugter Weise in Form einer Grifflasche ausgebildet, welche mit einer Schlaufe versehen sein kann, um beispielsweise einen Maurerhammer einzuhängen. Es versteht sich, dass im Rahmen der Erfindung auch die Anbringung des Handhabungselementes an der Innenwand des Rohrelements vorgesehen sein kann, um den Trennstreifen nach innen abzuziehen (beispielsweise bei sehr großen Rohrelementen, deren Außenseite glatt und nicht durch Kerben gestört sein soll).

Das erfindungsgemäße Rohrelement zeichnet sich durch eine Reihe erheblicher Vorteile aus. Durch die erfindungsgemäße Möglichkeit, mittels des Trennstreifens das Rohrelement abzulängen, zu unterteilen oder Teile von diesem abzutrennen, ergibt sich eine exakte, schnelle und sichere Bearbeitung.

Die Erfindung ist insbesondere bei Rohrsystemen besonders vorteilhaft anwendbar, die sich nur schlecht schneiden lassen, beispielsweise bei großen Rohrfittingen aus gefülltem PP (Polypropylen).

Ein weiterer Vorteil der erfindungsgemäßen Ausgestaltung liegt darin, dass diese auch durch ungeübte Arbeitskräfte problemlos betätigbar ist. Sie ist im Wesentlichen vor Bedienungsfehlern geschützt.

Besonders vorteilhaft ist es, wenn das Handhabungselement (Grifflasche etc.) abreißbar an dem Trennstreifen befestigt ist. Dies ist insbesondere dann günstig, wenn das Rohrelement, der Fitting oder Ähnliches ohne Ablängung eingesetzt werden soll oder wenn bei mehreren erfindungsgemäßen Abtrennmitteln nur eines zum Einsatz kommt. Das Handhabungselement kann dann entfernt werden, so dass sich eine glatte, ungestörte Außenkontur des Rohrelements ergibt.

Um den Einreißvorgang zur Abtrennung des Trennstreifens einzuleiten, kann es günstig sein, wenn das Handhabungselement an einem dem Trennstreifen oder dem Wandungsbereich zugewandten Bereich mit Anreißmitteln versehen ist. Diese erzeugen einen ersten Einriss. Besonders günstig ist es hierbei, Zacken oder Ähnliches auszubilden. Wenn der erste Anriss oder Einriss erfolgt ist, kann der Trennstreifen leicht weiter abgezogen werden.

Um die Abtrennung von nicht benötigten Handhabungselementen zu erleichtern, ist es günstig, wenn am Übergang von dem Handhabungselement zu dem Trennstreifen eine Sollbruchstelle ausgebildet ist. Somit kann das Handhabungselement (Grifflasche etc.) so entfernt werden, dass sich eine glatte Außenkontur des Wandungsbereichs des Rohrelements ergibt. Zusätzlich wird verhindert, dass bei der weiteren Verwendung des Rohrelements in unbeabsichtigter Weise ein Einreißen oder Abtrennen erfolgt.

Da es sich bei dem erfindungsgemäßen Rohrelement um ein drucklos anzuwendendes Bauteil handelt, führen die an den Trennstreifen angebrachten Kerben nicht zu einer merkbaren Schwächung des Materialquerschnitts, so dass sich keine Festigkeitsprobleme ergeben.

Durch die erfindungsgemäß vorgesehenen Abtrennmittel ist es möglich, Rohrelemente in Standardlängen zu kürzen, beispielsweise in Schritten von jeweils 5 cm, so dass diese beispielsweise an genormte Wanddicken von Gebäuden einfach anpassbar sind.

Nachfolgend wird die Erfindung anhand von Ausführungsbeispielen in Verbindung mit der Zeichnung beschrieben. Dabei zeigt:
- Fig. 1: eine vereinfachte, schematische Seitenansicht eines ersten Ausführungsbeispiels eines erfindungsgemäßen Rohrelements,
- Fig. 2: eine vergrößerte Darstellung der Einzelheit gemäß Fig. 1,
- Fig. 3: eine perspektivische Ansicht des in Fig. 1 gezeigten Ausführungsbeispiels,
- Fig. 4: eine vergrößerte Darstellung der Einzelheit gemäß Fig. 3,
- Fig. 5: eine rückseitige Ansicht des in Fig. 1 gezeigten Ausführungsbeispiels,
- Fig. 6: eine vergrößerte Darstellung der Einzelheit gemäß Fig. 5,
- Fig. 7: eine weitere, gedrehte perspektivische Ansicht analog Fig. 3,
- Fig. 8: eine Einzelheit gemäß Fig. 7,
- Fig. 9: eine schematische Seitenansicht eines weiteren Ausführungsbeispiels eines erfindungsgemäßen Rohrelements,
- Fig. 10: eine Seitenansicht, analog Fig. 1,
- Fig. 11: eine Schnittansicht längs der Linie A-A von Fig. 10, und
- Fig. 12: eine Schnittansicht, analog Fig. 11, in verschiedenen Bedienungszuständen.

Bei den Ausführungsbeispielen sind gleiche Teile mit gleichen Bezugsziffern versehen.

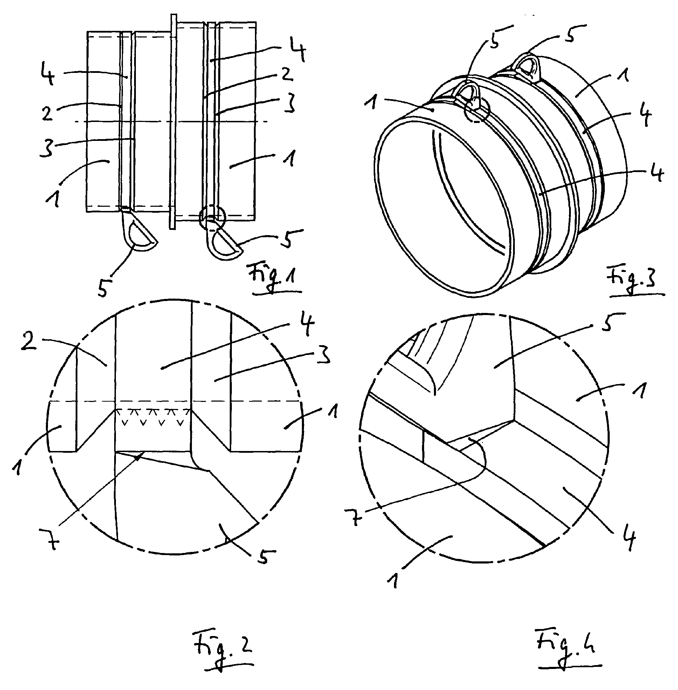

Das erfindungsgemäße Rohrelement umfasst einen Wandungsbereich 1, welcher bevorzugter Weise zylindrisch ausgebildet ist. An diesem sind zwei zueinander parallele Kerben 3, 4 ausgebildet, welche sich um den Umfang erstrecken und zwischen ihnen einen Trennstreifen 4 definieren (siehe insbesondere Fig. 1 und 9).

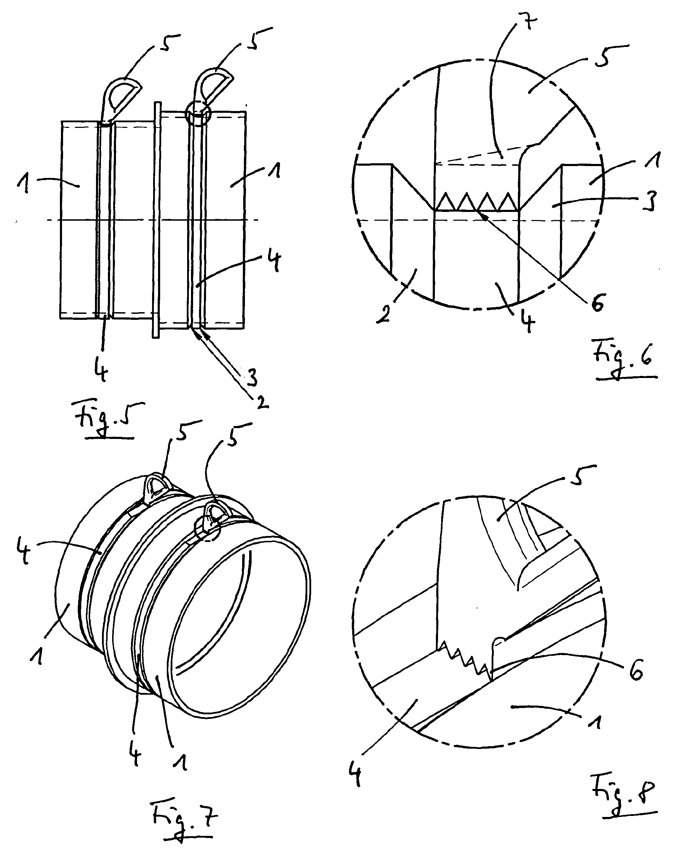

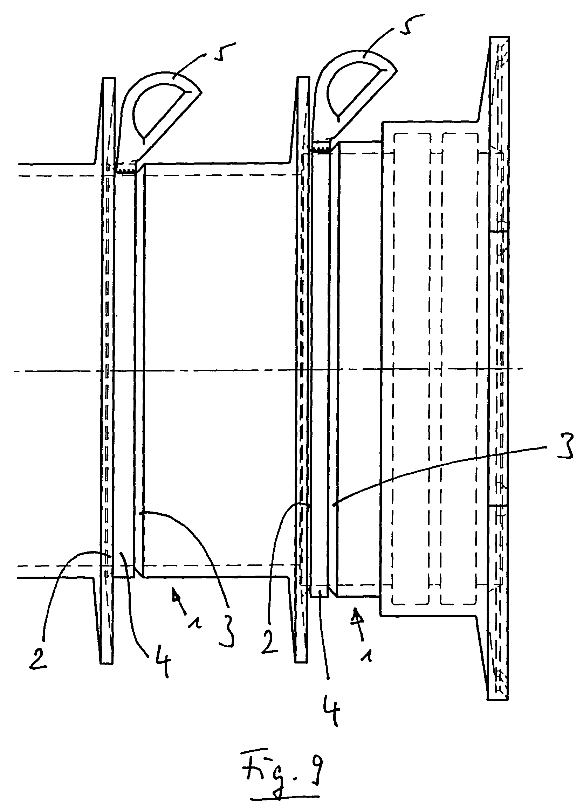

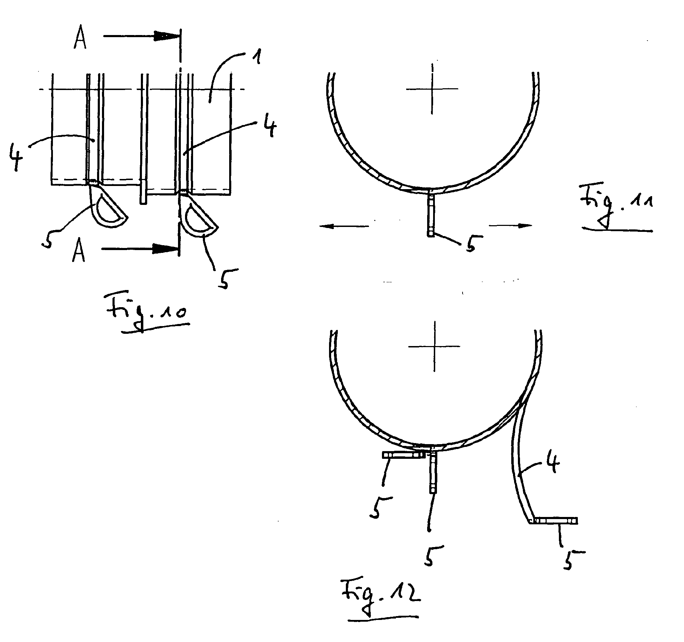

An dem Trennstreifen 4 ist ein Handhabungselement 5 angebracht, welches in Form einer Griffschlaufe oder Grifflasche ausgebildet ist und einstückig mit dem Trennstreifen 4 verbunden ist. An einer Seite des Handhabungselements 5 ist eine Sollbruchstelle 7 ausgebildet (siehe Fig. 2 und 4), mit Hilfe derer es möglich ist, das Handhabungselement 5 abzutrennen, wenn dieses nicht benötigt wird, und das erfindungsgemäße Rohrelement nicht abgelängt oder geteilt werden soll.

Die andere Seite des Handhabungselements 5 ist mit Anreißmitteln 6 versehen, welche in Form von Zacken ausgebildet sind (siehe insbesondere Fig. 2, 6 und 8). Die Zacken 6 dienen dazu, einen ersten Einriss des Trennstreifens im Bereich der Kerben 2 und 3 zu bewirken und im Übrigen den Trennstreifen 4 zu durchtrennen, um diesen abzuziehen oder abzureißen.

Fig. 11 zeigt eine Schnittansicht, in welcher sich das Handhabungselement 5 in der Ausgangsposition befindet. Hierbei steht es im Wesentlichen rechtwinklig von der Oberfläche des Wandungsbereichs 1 ab. Die Fig. 12 zeigt verschiedene Betriebszustände. Wenn das Handhabungselement 5 gemäß dem nach links weisenden Pfeil der Fig. 11 bewegt oder gekippt wird, kann das Handhabungselement 5 mittels der Sollbruchstelle 7 abgetrennt werden, ohne dass der Trennstreifen 4 angerissen oder herausgezogen wird. Wird dagegen das Handhabungselement 5 gemäß dem nach rechts weisenden Pfeil der Fig. 11 gezogen, so bewirken die Anreißmittel (Zacken) 6 ein Einreißen des Trennstreifens 4 sowie eine Einkerbung im Bereich der Kerben 2, 3, so dass der Trennstreifen 4, so wie dies in der rechten Bildhälfte der Fig. 12 gezeigt ist, abgezogen werden kann.

### Bezugszeichenliste

- 1: Wandungsbereich
- 2: Kerbe
- 3: Kerbe
- 4: Trennstreifen
- 5: Handhabungselement
- 6: Anreißmittel (Zacken)
- 7: Sollbruchstelle

## Patentansprüche

1. Rohrelement aus Kunststoff mit einem Wandungsbereich (1), welcher mit zumindest zwei zueinander parallelen, an der Außenseite des Wandungsbereichs (1) ausgebildeten Kerben (2, 3) versehen ist, welche einen nach außen abreißbaren Trennstreifen (4) ausbilden, an welchem ein Handhabungselement (5) befestigt ist.

2. Rohrelement nach Anspruch 1, **dadurch gekennzeichnet, dass** an dem Rohrelement mehrere mit Kerben (2, 3) versehene Wandungsbereiche (1) vorgesehen sind.

3. Rohrelement nach Anspruch 1 oder 2, **dadurch gekennzeichnet, dass** das Handhabungselement (5) in Form einer Grifflasche ausgebildet ist.

4. Rohrelement nach einem der Ansprüche 1 bis 3, **dadurch gekennzeichnet, dass** das Handhabungselement (5) einstückig mit dem Trennstreifen (4) ausgebildet ist.

5. Rohrelement nach einem der Ansprüche 1 bis 4, **dadurch gekennzeichnet, dass** das Handhabungselement (5) an einem dem Trennstreifen (4) zugewandten Bereich mit Anreißmitteln (6) versehen ist.

6. Rohrelement nach Anspruch 5, **dadurch gekennzeichnet, dass** die Anreißmittel in Form von zumindest einem Zacken (6) ausgebildet sind.

7. Rohrelement nach einem der Ansprüche 1 bis 6, **dadurch gekennzeichnet, dass** der Wandungsbereich (1) im Wesentlichen zylindrisch ausgebildet ist.

8. Rohrelement nach einem der Ansprüche 1 bis 7, **dadurch gekennzeichnet, dass** das Handhabungselement (5) teil der Wandung (1) ist.

9. Rohrelement nach einem der Ansprüche 1 bis 8, **dadurch gekennzeichnet, dass** das Handhabungselement (5) abreißbar an dem Trennstreifen (4) befestigt ist.
